# EUROPÄISCHE PATENTANMELDUNG

(11) **EP 4 703 334 A1**
(43) Veröffentlichungstag der Anmeldung: **04.03.2026**
(21) Anmeldenummer: 24197777.6
(22) Anmeldetag: 30.08.2024
(51) Int. Cl.: C04B 26/04, C04B 40/00

(54) **ZUSAMMENSETZUNG UND VERFAHREN ZUR HERSTELLUNG EINER SCHALLABSORBIERENDEN LEICHTBAUPLATTE**

(71) Anmelder: STO SE & Co. KGaA, 79780 Stühlingen (DE)
(72) Erfinder: Blaskovich, Samuel, 89537 Giengen (DE)
(74) Vertreter: Gottschalk, Matthias

(57) **Zusammenfassung**

Die Erfindung betrifft eine Zusammensetzung zur Herstellung einer schallabsorbierenden Leichtbauplatte, enthaltend
- eine mindestens drei Partikelgrößenfraktionen enthaltende Leichtfüllstoffkombination, umfassend
• eine erste Fraktion (A) mit einer Partikelgröße nach DIN EN 933-1 von 0,8-2,5 mm, vorzugsweise von 0,9-2,2 mm, weiterhin vorzugsweise von 1,0-2,0 mm,
• eine zweite Fraktion (B) mit einer Partikelgröße nach DIN EN 933-1 von 0,28-1,6 mm, vorzugsweise von 0,4-1,25 mm, weiterhin vorzugsweise von 0,5-1,0 mm, und
• eine dritte Fraktion (C) mit einer Partikelgröße nach DIN EN 933-1 von 0,1-0,8 mm, vorzugsweise von 0,2-0,63 mm, weiterhin vorzugsweise von 0,25-0,5 mm

- mindestens ein organisches Bindemittel sowie
- mindestens ein Additiv.

Ferner betrifft die Erfindung ein Verfahren zur Herstellung einer schallabsorbierenden Leichtbauplatte unter Verwendung einer erfindungsgemäßen Zusammensetzung.

## Beschreibung

Die Erfindung betrifft eine Zusammensetzung zur Herstellung einer schallabsorbierenden Leichtbauplatte. Darüber hinaus betrifft die Erfindung ein Verfahren zur Herstellung einer schallabsorbierenden Leichtbauplatte unter Verwendung einer erfindungsgemäßen Zusammensetzung.

### Stand der Technik

Schallabsorbierende Leichtbauplatten für den Baubereich gibt es in vielen Varianten. Bekannt sind beispielsweise Platten mit einer strukturierten Oberfläche, an denen Schallwellen gebrochen, umgelenkt und/oder gefangen werden. Zur Strukturierung der Oberfläche können beispielsweise in die Platte gezielt Löcher eingebracht werden. Ferner bekannt sind Schichtplatten mit einem inhomogenen bzw. schichtweisen Aufbau, wobei die schallabsorbierende Wirkung mit zumindest einer Schicht erzielt wird. Dies kann eine an der Oberfläche liegende Schicht, aber auch eine innenliegende Schicht sein. Darüber hinaus sind homogen aufgebaute Leichtbauplatten oder Formkörper bekannt, die porige bzw. offenzellige Leichtfüllstoffe zur Schallabsorption enthalten. Mit Eintritt einer Schallwelle in eine Pore bzw. Zelle entsteht Reibung, wobei die kinetische Energie der Schallwelle in Wärme umgewandelt bzw. die Schallwelle absorbiert wird.

Ein homogen aufgebauter Formkörper aus einem Leichtwerkstoff geht beispielhaft aus der EP 2 891 752 A1 hervor. Der hierin beschriebene Formkörper enthält zumindest eine Gesteinskörnung und ein Bindemittel, wobei das Bindemittel Hydratationsprodukte zumindest eines Zementes enthält. Der Formkörper weist eine Partikeleigenporigkeit und/oder eine Haufwerksporigkeit sowie einen Schallabsorptionsgrad (α) nach ISO 10534-2:1998 von etwa 0,1 bis etwa 0,7 auf. Zur Herstellung des Formkörpers wird eine Trockenmischung durch Mischen von zumindest einer Gesteinskörnung und Zement hergestellt. Der Trockenmischung wird Wasser zugegeben und die derart erhaltene Mischung wird in eine Form eingefüllt. Die in die Form eingefüllte Mischung wird eingerüttelt und/oder axial oder isostatisch gepresst. Durch hydraulisches Abhärten des Zementes entsteht dann ein Formkörper mit einer Partikeleigenporigkeit und/oder einer Haufwerksporigkeit.

Die vorliegende Erfindung ist mit der Aufgabe befasst, das Schallabsorptionsverhalten einer schallabsorbierenden Leichtbauplatte zu verbessern. Insbesondere soll eine gleichmäßige Schallabsorption über einen möglichst breiten Frequenzbereich erzielt werden, so dass nicht nur mittlere, sondern auch hohe und tiefe Frequenzen effektiv absorbiert werden. Zudem soll die schallabsorbierende Leichtbauplatte möglichst einfach und kostengünstig herstellbar sein.

Zur Lösung der Aufgabe werden die Zusammensetzung mit den Merkmalen des Anspruchs 1 sowie das Verfahren mit den Merkmalen des Anspruchs 16 vorgeschlagen. Vorteilhafte Weiterbildungen der Erfindung sind den jeweiligen Unteransprüchen zu entnehmen.

### Offenbarung der Erfindung

Die vorgeschlagene Zusammensetzung zur Herstellung einer schallabsorbierenden Leichtbauplatte enthält:
- eine mindestens drei Partikelgrößenfraktionen enthaltende Leichtfüllstoffkombination, umfassend
   - eine erste Fraktion (A) mit einer Partikelgröße nach DIN EN 933-1 von 0,8-2,5 mm, vorzugsweise von 0,9-2,2 mm, weiterhin vorzugsweise von 1,0-2,0 mm,
   - eine zweite Fraktion (B) mit einer Partikelgröße nach DIN EN 933-1 von 0,28-1,6 mm, vorzugsweise von 0,4-1,25 mm, weiterhin vorzugsweise von 0,5-1,0 mm, und
   - eine dritte Fraktion (C) mit einer Partikelgröße nach DIN EN 933-1 von 0,1-0,8 mm, vorzugsweise von 0,2-0,63 mm, weiterhin vorzugsweise von 0,25-0,5 mm
- mindestens ein organisches Bindemittel sowie
- mindestens ein Additiv.

Die Erfindung beruht auf der Erkenntnis, dass die Porenanzahl, Porengröße sowie Porenverteilung das Schallabsorptionsverhalten einer schallabsorbierenden Leichtbauplatte wesentlich beeinflusst. Die vorherrschende Meinung bislang war, dass möglichst große Poren für die Schallabsorption von Vorteil sind. Das Gegenteil ist der Fall, insbesondere wenn es um die Abdeckung eines möglichst breiten Frequenzbereichs geht. Denn es wurde festgestellt, dass eine höhere Porenanzahl bei zugleich verringertem Porendurchmesser zu einer Verbesserung der Schallabsorption, insbesondere bei hohen und tiefen Frequenzen führt.

Eine Erhöhung der Porenanzahl bei zugleich verringertem Porendurchmesser wird vorliegend dadurch erreicht, dass die zur Herstellung einer schallabsorbierenden Leichtbauplatte verwendete Zusammensetzung eine aus mindestens drei Partikelgrößenfraktionen bzw. Korngruppen zusammengesetzte Leichtfüllstoffkombination enthält. Das heißt, dass die Leichtfüllstoffe in zumindest trimodaler Partikelgrößenverteilung vorliegen. Dies führt in der Zusammensetzung sowie in einer hieraus hergestellten Leichtbauplatte zu einer hohen Packungsdichte der Leichtfüllstoffe. Die hohe Packungsdichte wiederum verringert die Größe der zwischen den Leichtfüllstoffpartikeln verbleibenden Zwischenräume bzw. Haufwerksporen.

Eine Erhöhung der Porenanzahl bei zugleich verringertem Porendurchmesser wird vorliegend ferner dadurch erreicht, dass mindestens eine Fraktion, vorliegend die Fraktion C, eine Feinfraktion ausbildet. Die Leichtfüllstoffpartikel der Feinfraktion sind besonders klein, so dass sie kleine Poren besetzen und zur Ausbildung kleiner Poren bzw. Haufwerksporen führen, die zwischen den Leichtfüllstoffpartikeln verbleiben. Ferner steigt die Anzahl der enthaltenen Leichtfüllstoffpartikel und damit die Anzahl der Haufwerksporen.

Die in der Zusammensetzung enthaltene Feinfraktion bzw. Fraktion C erhöht zudem die Masse einer aus der erfindungsgemäßen Zusammensetzung hergestellten Leichtbauplatte. Dies wiederum wirkt sich positiv auf die Schallabsorption tiefer Frequenzen aus.

Aufgrund der enthaltenen Leichtfüllstoffkombination ermöglicht die vorgeschlagene Zusammensetzung die Herstellung einer schallabsorbierenden Leichtbauplatte, die in der Lage ist, Schallwellen in einem Frequenzbereich von 125 bis 5000 Hz zu absorbieren. Das heißt, dass von der Leichtbauplatte auch hohe und tiefe Frequenzen absorbiert werden. Darüber hinaus wird erreicht, dass die Absorption über den gesamten Frequenzbereich geleichmäßiger verläuft. Das heißt, dass eine Glättung der Absorptionskurve erzielt wird, so dass diese weniger steil verläuft.

Die Partikelgrößenfraktionen der enthaltenen Leichtfüllstoffkombination können einen sich überschneidenden Bereich aufweisen. Ist dies der Fall, ist vorzugsweise der Überschneidungsbereich kleiner als der Bereich, der jeweils außerhalb des Überschneidungsbereichs liegt.

Bevorzugt ist die Partikelgröße nach DIN EN 933-1 einer Fraktion um mindestens den Faktor 0,5 kleiner als die der nächstgröberen Fraktion. Das heißt, dass die Partikelgröße der Fraktion C um mindestens den Faktor 0,5 kleiner als die Partikelgröße der Fraktion B ist und die Partikelgröße der Fraktion B mindestens um den Faktor 0,5 kleiner als die Partikelgröße der Fraktion A ist. Durch diese Maßnahme wird ein deutlicher Partikelgrößenunterschied zwischen den Fraktionen erzielt, der sicherstellt, dass sich die jeweils feineren Leichtfüllstoffpartikel in die Zwickelräume zwischen den jeweils gröberen Leichtfüllstoffpartikeln setzen können.

In Weiterbildung der Erfindung wird vorgeschlagen, dass die erste Fraktion A
- einen D50-Wert von 1,0-2,0 mm, vorzugsweise von 1,1-1,9 mm, weiterhin vorzugsweise von 1,2-1,8 mm,
- einen D90-Wert von 1,75-2,0 mm und/oder
- einen D10-Wert von 1,0-1,25 mm
aufweist.

Ferner wird vorgeschlagen, dass die zweite Fraktion B
- einen D50-Wert von 0,5-1,0 mm, vorzugsweise von 0,55-0,9 mm, weiterhin vorzugsweise von 0,6-0,8 mm,
- einen D90-Wert von 0,8-1,0 mm und/oder
- einen D10-Wert von 0,5-0,7 mm aufweist.

Des Weiteren wird vorgeschlagen, dass die dritte Fraktion C
- einen D50-Wert von 0,25-0,5 mm, vorzugsweise von 0,3-0,45 mm,
- einen D90-Wert von0,45-0,5 mm und/oder
- einen D10-Wert von 0,25-0,30 mm
aufweist.

Der D50-Wert wird auch Halbwertsgröße oder Medianwert genannt. Er gibt die mittlere Partikelgröße einer Fraktion an, das heißt, dass der Gewichtsanteil der Leichtfüllstoffpartikel, die größer als der D50-Wert sind, gleich dem Gewichtsanteil der Leichtfüllstoffpartikel ist, die kleiner als der D50-Wert sind. Beim D90-Wert beträgt der Gewichtsanteil der Leichtfüllstoffpartikel, die kleiner als der D90-Wert sind, 90 Gew.-% und beim D10-Wert beträgt der Gewichtsanteil der Leichtfüllstoffpartikel, die kleiner sind als der D10-Wert, 10 Gew.-%, jeweils bezogen auf das Gesamtgewicht der Leichtfüllstoffpartikel der jeweiligen Fraktion. Die Bestimmung dieser Werte erfolgt bevorzugt nach DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnungen von mittleren Partikelgrößen/ -durchmessern und Momenten aus Partikelgrößenverteilungen). Zur Bestimmung der Partikelgrößen kann beispielsweise der Mastersizer 3000 der Firma Malvern Instruments Limited als Instrument eingesetzt werden. In der Regel können die jeweiligen Werte aber auch einfach einem technischen Datenblatt entnommen werden, das mit dem Leichtfüllstoff ausgeliefert wird.

Bei der vorgeschlagenen Zusammensetzung beträgt vorzugsweise das Verhältnis des D50-Werts einer Fraktion zum D50-Wert der nächstgröberen Fraktionen 1,5 bis 4, vorzugsweise 1,75 bis 3, weiterhin vorzugsweise 1,8 bis 2,5. Das heißt, dass bevorzugt der D50-Wert einer Fraktion nur halb so groß wie der D50-Wert der nächstgröberen Fraktion ist, um eine möglichst dichte Packung der Leichtfüllstoffe zu erhalten.

Die vorstehend genannten Werte sind nicht willkürlich gewählt, sondern lassen sich mathematisch aus der Theorie einer möglichst dichten Kugelpackung ableiten. In einer möglichst dichten Kugelpackung bilden sich Tetraederlücken und Oktaederlücken aus. In eine Oktaederlücke zwischen Partikeln/Kugeln eines Feinfüllstoffs mit dem Durchmesser D passt eine kleinere Kugel mit einem Durchmesser d, wenn d im Bereich 0,155*D und 0,414*D liegt. Maßgebender sind jedoch die Tetraederlücken. In eine Tetraederlücke zwischen Partikeln/Kugeln eines Feinfüllstoffs mit dem Durchmesser D passt eine kleinere Kugel mit einem Durchmesser d, wenn d im Bereich 0,225*D und 0,291*D liegt.

Des Weiteren bevorzugt enthält die Zusammensetzung keine Partikel die größer als die Leichtfüllstoffpartikel der Fraktion A sind, da diese dem Ziel einer möglichst hohen Packungsdichte der enthaltenen Partikel entgegenstehen.

Gemäß einer bevorzugten Ausführungsform der Erfindung sind jeweils bezogen auf das Gesamtgewicht der Ausgangsstoffe
- 30-60 Gew.-%, vorzugsweise 32-56 Gew.-%, weiterhin vorzugsweise 34-50 Gew.-% Leichtfüllstoffe der ersten Fraktion A,
- 20-50 Gew.-%, vorzugsweise 24-45 Gew.-%, weiterhin vorzugsweise 26-40 Gew.-% der zweiten Fraktion B und
- 4-16 Gew.-%, vorzugsweise 6-14 Gew.-%, weiterhin vorzugsweise 8-12 Gew.-% der dritten Fraktion C
enthalten. Auch diese Maßnahme trägt zu einer Partikelgrößenverteilung bei, die eine hohe Packungsdichte der Leichtfüllstoffpartikel innerhalb der Zusammensetzung sowie in einer hieraus hergestellten Leichtbauplatte begünstigt.

Ein Leichtfüllstoff kann insbesondere über seine Dichte definiert werden. Dabei gilt es zwischen verschiedenen Dichten zu unterscheiden, nämlich der Rohdichte nach EN 1097-6 (scheinbare Rohdichte, Partikelrohdichte) und der Schüttdichte nach EN 1097-3. Die Rohdichte hängt vom Porenvolumen eines Leichtfüllstoffs bzw. eines Leichtfüllstoff-Partikels ab. Die Schüttdichte bezieht sich auf die Dichte einer losen Schüttung bzw. eines Haufwerks des Leichtfüllstoffs, das heißt einer Vielzahl von Leichtfüllstoffpartikeln. Sie wird durch das zwischen den einzelnen Partikeln verbleibende Zwickelvolumen bestimmt.

Die erste Fraktion A weist bevorzugt eine Rohdichte nach EN 1097-6 < 700 kg/m³, vorzugsweise < 600 kg/m³, weiterhin vorzugsweise < 400 kg/m³ auf. Ferner bevorzugt weist die zweite Fraktion B eine Rohdichte nach EN 1097-6 < 800 kg/m³, vorzugsweise < 700 kg/m³, weiterhin vorzugsweise < 500 kg/m³ auf. Des Weiteren bevorzugt weist die dritte Fraktion C eine Rohdichte nach EN 1097-6 < 800 kg/m³, vorzugsweise < 700 kg/m³, weiterhin vorzugsweise < 600 kg/m³ auf.

Die erste Fraktion A weist bevorzugt eine Schüttdichte nach EN 1097-3 < 500 kg/m³, vorzugsweise < 400 kg/m³, weiterhin vorzugsweise < 250 kg/m³ auf. Ferner bevorzugt weist die zweite Fraktion B eine Schüttdichte nach EN 1097-3 < 600 kg/m³, vorzugsweise < 500 kg/m³, weiterhin vorzugsweise < 300 kg/m³ auf. Des Weiteren bevorzugt weist die dritte Fraktion C eine Schüttdichte nach EN 1097-3 < 600 kg/m³, vorzugsweise < 500 kg/m³, weiterhin vorzugsweise < 400 kg/m³ auf.

Für die gewünschte hohe Packungsdichte ist zudem die Schüttdichte der Leichtfüllstoffkombination, das heißt der Leichtfüllstoffe nach dem Mischen der verschiedenen Fraktionen von Bedeutung. Bevorzugt ist die Schüttdichte der Leichtfüllstoffkombination aus den Fraktionen A, B und C - bei gleichen Gewichtsanteilen - größer als die Schüttdichte der Einzelfraktionen, insbesondere größer als die Schüttdichte der Feinfraktion bzw. der Fraktion C.

Zur Minimierung der Bruchgefahr wird vorgeschlagen, dass die mittlere Partikelfestigkeit nach DIN EN 13055-1 der enthaltenen Leichtfüllstoffpartikel mindestens 1,2 N/mm², vorzugsweise 1,6 N/mm², weiterhin vorzugsweise 1,8 N/mm² beträgt. Ferner wird vorgeschlagen, dass Leichtfüllstoffpartikel verwendet werden, die zumindest annähernd kugelförmig sind. Denn die Kugelform erhöht die Druck- und damit Bruchfestigkeit der einzelnen Partikel. Eine hohe Bruchfestigkeit sollten insbesondere die Leichtfüllstoffpartikel der gröbsten Fraktion, das heißt der Fraktion A, aufweisen, da deren Aufgabe vor allem darin besteht, innerhalb der Füllstoffpackung ein strukturgebende Grundgerüst ausbilden.

Besonders bevorzugt ist bzw. sind Blähglas, Blähton, Blähschiefer, geschäumtes Blähglas, Blähglasgranulate, Blähperlite, Blähglimmer, insbesondere geblähtes oder geschäumtes Vermiculit, Hohlglaskugeln, Hohlkeramikkugeln, Lavaschlacke, Tuff und/oder Bims als Leichtfüllstoff in der Leichtfüllstoffkombination enthalten.

Darüber hinaus kann in der vorgeschlagenen Zusammensetzung ein Feinstfüllstoff mit einem D50-Wert von 1-100 µm, vorzugsweise 2-60 µm, weiterhin vorzugsweise von 4-40 µm enthalten sein. Bei dem Feinstfüllstoff kann es sich insbesondere um einen silikatischen, karbonatischen, oxidischen, hydroxidischen und/oder sulfatischen Füllstoff, beispielsweise Quarz, Cristobalit, Ettringit, Calciumcarbonat, Calcit, Kalkstein, Marmor, Dolomit, Aluminiumhydroxid und/oder Erdalkalisulfate, handeln. Der ferner enthaltene Feinstfüllstoff setzt sich in die verbleibenden Zwickelräume zwischen den Leichtsüllstoffpartikeln und trägt somit zu einer weiteren Erhöhung der Packungsdichte bei. Ferner reduziert sich die Größe der Haufwerksporen, während ihre Anzahl steigt. Bevorzugt beträgt der Anteil der enthaltenen Feinstfüllstoffe weniger als 25 Gew.-%, vorzugsweise weniger als 20 Gew.-%, weiterhin vorzugsweise weniger als 10 Gew.-% bezogen auf das Gesamtgewicht der Ausgangsstoffe der Zusammensetzung.

Ferner bevorzugt weist der enthaltene Feinstfüllstoff eine Mohshärte ≤ 4, vorzugsweise ≤ 3,5, auf. Das heißt, dass vorzugsweise der Feinstfüllstoff relativ "weich" ist. Der relativ "weiche" Feinstfüllstoff kann zwischen den gröberen Füllstoffen leichter aufgerieben werden und so als eine Art Schmierung zwischen diesen dienen. Weniger nachgiebige bzw. "harte" Feinstfüllstoffe zerbrechen eher die Leichtfüllstoffe und wirken dann wie "Sand im Getriebe".

Des Weiteren bevorzugt weist der enthaltene Feinstfüllstoff einen negativen PCS-Wert, vorzugsweise eine PCS-Wert < -0,5 MJ/kg, weiterhin vorzugsweise einen PCS-Wert < -0,8 MJ/kg, auf. "PCS" steht für "Pouvoir Calorifique Supérieur" und bedeutet so viel wie Brutto-Verbrennungswärme. Der PCS-Wert wird bei der Berechnung der Brennbarkeit von Baustoffen herangezogen. Gemessen wird der PCS-Wert nach DIN EN ISO 1716 in einem Bombenkalorimeter, beispielsweise einem IKA C 2000. Die Einheit ist MJ/kg. Flammschutzmittel weisen einen negativen PCS-Wert bzw. eine negative Brutto-Verbrennungswärme auf. Das heißt, dass sie bei der Verbrennung Energie aufnehmen bzw. verbrauchen und nicht freisetzen. Da vorliegend der enthaltene Feinstfüllstoff ebenfalls einen negativen PCS-Wert aufweist, dient er zugleich als Flammschutzmittel, so dass ggf. auf die separate Zugabe eines Flammschutzmittels verzichtet werden kann. Besonders bevorzugt werden in diesem Fall Ettringit, Calciumcarbonat, Calcit, Kalkstein, Marmor, Dolomit und/oder Aluminiumhydroxid als Feinstfüllstoff eingesetzt. Calciumcarbonat weist beispielsweise - je nach Typ, Reinheit und Beschaffenheit -einen PCS-Wert zwischen -0,8 und -1,21 auf. Der PCS-Wert von Aluminiumhydroxid liegt - je nach Reinheit und Beschaffenheit - zwischen -0,52 und -1,1. Ettringit weist einen PCS-Wert von - 0,83 auf.

Ferner wird vorgeschlagen, dass in der Zusammensetzung ein organisches Polymerbindemittel als organisches Bindemittel enthalten ist, vorzugsweise ein organisches Polymerbindemittel auf Basis von Vinylacetat/Ethylen-Copolymeren, ein Copolymer auf Basis von Vinylaromaten, insbesondere Styrol, und Acrylaten und/oder ein Copolymer auf Basis von Reinacrylaten. Demgemäß gelangt insbesondere ein organisches Polymerbindemittel zum Einsatz, bei dem die in Wasser dispergierten oder dispergierbaren Polymere aus gleichen oder verschiedenen Monomeren gebildet sind, wobei mindestens ein Monomer ein Acrylsäureester, Methacrylsäureester, Acrylsäure, Methacrylsäure, Vinylacetat, Vinylchlorid, Versatat, Acrylnitril oder eine vinylaromatische Verbindung darstellt. Besonders bevorzugt wird ein Copolymer aus Vinylacetat und Ethylen als organisches Polymerbindemittel eingesetzt.

Das in der Zusammensetzung enthaltene organische Polymerbindemittel trägt dazu bei, dass eine aus der Zusammensetzung hergestellte Leichtbauplatte eine gewisse Elastizität aufweist. Diese führt zu einem verbesserten Bruchverhalten, insbesondere im Vergleich zu zementgebundenen Leichtbauplatten.

Es hat sich gezeigt, dass die vorstehend genannten organischen Polymerbindemittel grundsätzlich als wässrige Dispersion eingesetzt werden können, die Verwendung des jeweiligen organischen Polymerbindemittels in Form eines trockenen Dispersionspulvers jedoch zu besseren Ergebnissen hinsichtlich der Eigenschaften einer aus der Zusammensetzung hergestellten Leichtbauplatte führt, und zwar insbesondere im Hinblick auf ihre Elastizität bzw. ihr Bruchverhalten. Ein Grund hierfür könnte sein, dass ein organisches Polymerbindemittel in Pulverform - im Unterschied zu einer organischen Polymerdispersion - sich nicht so gleichmäßig verteilt und demzufolge weniger, aber dafür stärkere Bindemittelbrücken zwischen den Leichtfüllstoffpartikeln ausbildet.

Alternativ zu den vorstehend genannten organischen Polymerbindemitteln ist in der vorgeschlagenen Zusammensetzung ein organisches Polymerbindemittel auf Epoxidharzbasis mit einem geeigneten Härter als organisches Bindemittel enthalten. Bei einem organischen Polymerbindemittel auf Epoxidharzbasis handelt es sich um ein reaktives Bindemittel, das heißt es trocknet nicht, sondern es härtet aus. Das Aushärten erfolgt schnellerund kontrollierbarer, was u.a. zu kürzeren Taktzeiten führt. Zudem ergeben organische Polymerbindemittel auf Epoxidharzbasis mechanisch stabile Platten bei zugleich geringem Materialeinsatz, da sie eine hohe Bindekraft aufweisen.

Unter einem organischen Polymerbindemittel auf "Epoxidharzbasis" wird vorliegend ein eine Epoxidgruppe enthaltendes Reaktionsharz verstanden. Hierbei handelt es sich um ein flüssiges oder verflüssigbares Harz, das mit einem Härter und ggf. weiteren Reaktionsmitteln, wie beispielsweise einem Beschleuniger ohne Abspaltung flüchtiger Verbindungen durch Polyaddition aushärtet. Bevorzugt ist ein Epoxidharz enthalten, das aus den Komponenten Bisphenol, insbesondere Bisphenol A und/oder Bisphenol F, und mindestens einer Epoxidverbindung, insbesondere Epichlorhydrin gebildet ist. Besonders bevorzugt ist ein Gemisch aus Bisphenol A und Bisphenol F enthalten. Als Härter ist bevorzugt ein Amin-Härter enthalten, vorzugsweise aus der Gruppe bestehend aus Diaminen, Triaminen, Tetraaminen, aliphatischen Polyaminen und aromatischen Polyaminen oder deren beliebigen Mischungen. Unter den Amin-Härtern kommen auch Amin-Addukte, Polyamin-Addukte, Polyoxyalkylendiamin, Polyamidoamin, Mannich-Basen, hergestellt durch Kondensation von einem Phenol, einem Amin und Formaldehyd, und transaminierte Mannich-Basen in Betracht. Auch können saure Härter, insbesondere Dicarbonsäureanhydride, wie beispielsweise Hexahydrophthalsäureanhydrid, eingesetzt werden.

Zum Erhärten flüssiger Epoxidharze können auch flüssige aliphatische Polyamine und/ oder Polyamidoamine eingesetzt werden. Diese sind insbesondere für die Kalthärtung, das heißt für die Härtung bei Raumtemperatur geeignet. Findet die Härtung bei Temperaturen oberhalb von 80°C statt, spricht man von einer Warmhärtung. Für die Warmhärtung eignen sich insbesondere aromatische Amine oder saure Härter, wie beispielsweise Anhydride der Phthalsäure.

Über den Härter können die Verarbeitungseigenschaften des auszuhärtenden bzw. aushärtenden Epoxidharzes, insbesondere die Verarbeitungs- und Aushärtungszeit, gesteuert werden. Zur Einstellung der Verarbeitungsviskosität des Epoxidharzes kann diesem ein Reaktivverdünner zugegeben werden bzw. dieser einen Reaktivverdünner enthalten. Der Reaktivverdünner senkt die Viskosität des Epoxidharzes und verlängert auf diese Weise die Topfzeit des Epoxidharzes. Geeignete Reaktivverdünner umfassen im Allgemeinen molekulare flüssige epoxyfunktionelle Verbindungen in Form von mono- und Diglycidylethern. Als Reaktivverdünner finden beispielsweise Glycidylether von aliphatischen, alicyclischen oder aromatischen Mono- oder insbesondere Polyalkoholen, wie Monogylcidylether, Verwendung. Ferner können Mischungen von zwei oder mehr Reaktivverdünnern verwendet werden.

Der Anteil des enthaltenen organischen Bindemittels beträgt vorzugsweise 4,0-12,0 Gew.-%, weiterhin vorzugsweise 6,0-11,0 Gew.-%, besonders bevorzugt 8,0-10,0 Gew.-% bezogen auf das Gesamtgewicht der Ausgangsstoffe der Zusammensetzung. Bevorzugt ist ein Epoxidharz mit einem geeigneten Härter als organisches Bindemittel enthalten.

Des Weiteren bevorzugt ist ein Hydrophobierungsmittel, beispielsweise aus der Gruppe der Silikonharze, Polysiloxane, Fettsäuren, Fettsäurederivate, Wachse und/oder Paraffine, enthalten. Das Hydrophobierungsmittel verringert die Neigung der Leichtfüllstoffpartikel, Wasser aufzunehmen und in den Poren einzulagern. Dadurch kann die Feuchtigkeit der Leichtfüllstoffpartikel reduziert werden, wodurch gleichzeitig das Rücktrocknen gefördert wird.

Gemäß einer bevorzugten Ausführungsform der Erfindung enthält die Zusammensetzung ein Hydrophobierungsmittel auf Siloxan-Basis, ausgewählt aus Polysiloxanen in Form von Silikonharzen oder Silikonölen. Polysiloxane können aus mono-, di-, tri- und/oder quartärfunktionalen Einheiten aufgebaut sein und können zu zwei- oder dreidimensionalen Strukturen vernetzen. Silikonharze sind Polysiloxane, die neben mono- und difunktionalen Einheiten auch aus tri- und ggfs. quartärfunktionalen Einheiten aufgebaut sind.

Gemäß einer weiteren bevorzugten Ausführungsform der Erfindung sind lineare Silikonöle als Hydrophobierungsmittel enthalten. Silikonöle werden gelegentlich mit flüssigen Silikonharzen verwechselt. Silikonöle in Sinne der Erfindung sind in der Regel linear (in seltenen Fällen cyclisch) und ausschließlich aus mono- und difunktionalen Einheiten aufgebaut. Sie enthalten keine tri- oder quartärfunktionalen Einheiten wie die Silikonharze und können deshalb nicht über Si-O-Si-Brücken vernetzen. Silikonöle sind, wie es die Bezeichnung "Öl" schon besagt, bei 20°C/1 bar flüssig bis zähflüssig. Bevorzugt ist das eingesetzte Silikonöl wasserfrei und/oder hat einen Wirkstoffgehalt von 100%.

Der Anteil des enthaltenen Hydrophobierungsmittels beträgt vorzugsweise 0,01-4,0 Gew.-% bezogen auf das Gesamtgewicht der Ausgangsstoffe der Zusammensetzung. Bevorzugt sind 0,05-3,0 Gew.-%, besonders bevorzugt 0,1-2,0 Gew.-% eines Hydrophobierungsmittels, insbesondere eines Hydrophobierungsmittels auf Siloxan-Basis, bezogen auf das Gesamtgewicht der Ausgangsstoffe in der Zusammensetzung enthalten.

Drüber hinaus wird ein Verfahren zur Herstellung einer schallabsorbierenden Leichtbauplatte aus einer erfindungsgemäßen Zusammensetzung vorgeschlagen. Bei dem Verfahren wird die Zusammensetzung homogen gemischt, in eine Form eingefüllt und in der Form unter Einwirkung von Druck und Wärme zu einer Platte verpresst. Die in der Zusammensetzung enthaltene Leichtfüllstoffkombination lässt sich einfach verarbeiten und führt somit zu einer erhöhten Produktionsqualität. Die Herstellung der schallabsorbierenden Leichtbauplatte ist demnach besonders einfach und kostengünstig.

Bevorzugt wird die Zusammensetzung in der Form bei einer Temperatur von 80-160°C verpresst. Des Weiteren bevorzugt wird die Zusammensetzung in der Form mit einem Kompressionsfaktor von 50-75% verpresst. Nach dem Verpressen kann die Leichtbauplatte zum Abkühlen aus der Form genommen werden. Dies ermöglicht kurze Taktzeiten beim Verpressen. Nach dem Entformen wird vorzugsweise der Leichtbauplatte eine Ruhe- bzw. Reifezeit von etwa 24 Stunden gelassen.

Als weiterbildende Maßnahme wird vorgeschlagen, dass zumindest eine Oberfläche der Leichtbauplatte mit einem Gewebe oder Vlies kaschiert wird. Durch das Gewebe oder Vlies kann die Schallabsorption der Leichtbauplatte weiter verbessert bzw. eine weitere Glättung der Absorptionskurve erzielt werden. Des Weiteren kann über das Gewebe oder Vlies eine Armierung der Leichtbauplatte erreicht werden, die zur Gesamtstabilität der Leichtbauplatte beiträgt. Das Gewebe oder Vlies kann bei der Herstellung der Leichtbauplatte in die Form eingelegt und zusammen mit der in die Form eingebrachten Zusammensetzung verpresst werden. Das Gewebe oder Vlies kann aber auch erst nachträglich aufgebracht werden.

Nachfolgend werden ein Ausführungsbeispiel einer erfindungsgemäßen Zusammensetzung zur Herstellung einer schallabsorbierenden Leichtbauplatte sowie ein Referenzbeispiel angegeben.

Aus beiden Zusammensetzungen wurden Leichtbauplatten hergestellt und anschließend deren Eigenschaften verglichen.

**Ausführungsbeispiel**

| | | |
|---|---|---|
| 40,0 | Gew.-% | Blähglas in einer Partikelgrößenfraktion (A) 1,0-2,0 mm |
| 33,0 | Gew.-% | Blähglas in einer Partikelgrößenfraktion (B) 0,5-1,0 mm |
| 10,0 | Gew.-& | Blähglas in einer Partikelgrößenfraktion (C) 0,25-0,5 mm |
| 8,0 | Gew.-% | Epoxidharz-Bindemittel und Amin-Härter |
| 8,5 | Gew.-% | Aluminiumhydroxid als Feinstfüllstoff |
| 0,5 | Gew.-% | Additive, enthaltend ein Hydrophobierungsmittel |
| 100 | Gew.-% | |

Zur Herstellung einer Leichtbauplatte wurden die vorstehend genannten Ausgangsstoffe der Zusammensetzung homogen gemischt, in eine Form eingefüllt, und in der Form unter Einwirkung von Druck und Wärme (150°C) zu einer Platte mit einer Plattenstärke von 19 mm verpresst. Nach drei Tagen Lagerung unter Normalbedingungen, das heißt bei etwa 20°C, 1 atm Druck und 50% rel. Luftfeuchte, wurden die mechanischen Eigenschaften der Platten untersucht. Die aus der Zusammensetzung gemäß Ausführungsbeispiel hergestellte Leichtbauplatte wies folgende Eigenschaften auf (Mehrfachbestimmung):
- Raumgewicht 326 kg/m³
- Biegezugfestigkeit in der 3-Punkt Biegefestigkeitsprüfung: 1,15 N/mm²
- Bruchpunkt: 94 N

**Referenzbeispiel**

| | | |
|---|---|---|
| 40,0 | Gew.-% | Blähglas in einer Partikelgrößenfraktion 2,0-4,0 mm |
| 33,0 | Gew.-% | Blähglas in einer Partikelgrößenfraktion 1,0-2,0 mm |
| 10,0 | Gew.-& | Blähglas in einer Partikelgrößenfraktion 0,5-1,0 mm |
| 8,0 | Gew.-% | Epoxidharz-Bindemittel und Amin-Härter |
| 8,5 | Gew.-% | Aluminiumhydroxid als Feinstfüllstoff |
| 0,5 | Gew.-% | Additive, enthaltend ein Hydrophobierungsmittel |
| 100 | Gew.-% | |

Zur Herstellung einer Leichtbauplatte wurden die vorstehend genannten Ausgangsstoffe homogen gemischt, in eine Form eingefüllt, und in der Form unter Einwirkung von Druck und Wärme (150°C) zu einer Platte mit einer Plattenstärke von 19 mm verpresst. Nach drei Tagen Lagerung unter Normalbedingungen, das heißt bei etwa 20°C, 1 atm Druck und 50% rel. Luftfeuchte, wurden die mechanischen Eigenschaften der Platten untersucht. Die aus der Zusammensetzung gemäß Referenzbeispiel hergestellte Leichtbauplatte wies folgende Eigenschaften auf (Mehrfachbestimmung):
- Raumgewicht: 315 kg/m³
- Biegezugfestigkeit in der 3-Punkt Biegefestigkeitsprüfung: 1,12 N/mm²
- Bruchpunkt: 95 N

Das heißt, dass die aus den beiden Zusammensetzungen hergestellten Platten sich im Hinblick auf ihre mechanischen Eigenschaften kaum unterschieden. Unterschiede zeigten sich jedoch deutlich im Hinblick auf das Schallabsorptionsvermögen bzw. den Schallabsorptionsgrad αs. Dieser wurde nach ISO 354 in einem Hallraum gemessen. Das Ergebnis der Messungen wurde in einem Diagramm aufgetragen, das als Figur beigefügt ist.

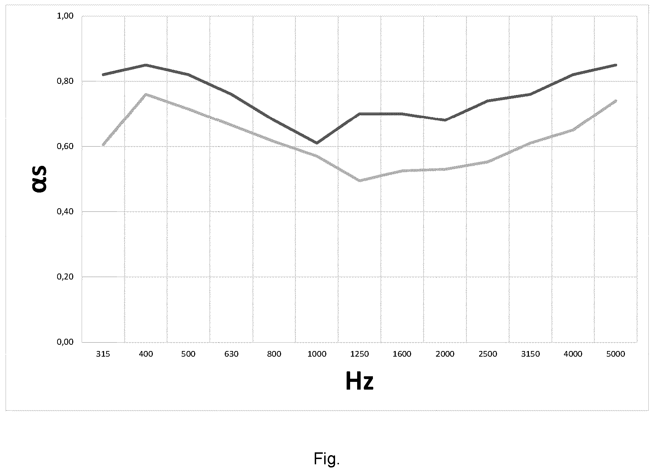

### Ausführliche Beschreibung der Figur

Dem in der Figur dargestellten Diagramm sind zwei Messkurven zu entnehmen, die jeweils den gemessenen Schallabsorptionsgrad αs über der Frequenz in Hertz (Hz) einer Leichtbauplatte darstellen. Wie bereits erwähnt, wurden die Messungen nach ISO 354 in einem Hallraum ausgeführt.

Die obere Messkurve gehört zur Leichtbauplatte, die aus der erfindungsgemäßen Zusammensetzung hergestellt wurde. Die untere Messkurve gehört zur Leichtbauplatte, die aus der Zusammensetzung gemäß Referenzbeispiel hergestellt wurde. Über alle Frequenzen hinweg wies die aus der erfindungsgemäßen Zusammensetzung hergestellte Leichtbauplatte einen höheren Schallabsorptionsgrad und damit ein höheres Schallabsorptionsvermögen auf.

## Patentansprüche

1. Zusammensetzung zur Herstellung einer schallabsorbierenden Leichtbauplatte, enthaltend
- eine mindestens drei Partikelgrößenfraktionen enthaltende Leichtfüllstoffkombination, umfassend
• eine erste Fraktion (A) mit einer Partikelgröße nach DIN EN 933-1 von 0,8-2,5 mm, vorzugsweise von 0,9-2,2 mm, weiterhin vorzugsweise von 1,0-2,0 mm,
• eine zweite Fraktion (B) mit einer Partikelgröße nach DIN EN 933-1 von 0,28-1,6 mm, vorzugsweise von 0,4-1,25 mm, weiterhin vorzugsweise von 0,5-1,0 mm, und
• eine dritte Fraktion (C) mit einer Partikelgröße nach DIN EN 933-1 von 0,1-0,8 mm, vorzugsweise von 0,2-0,63 mm, weiterhin vorzugsweise von 0,25-0,5 mm
- mindestens ein organisches Bindemittel sowie
- mindestens ein Additiv.

2. Zusammensetzung nach Anspruch 1,
**dadurch gekennzeichnet, dass** die Partikelgröße nach DIN EN 933-1 einer Fraktion (B, C) um mindestens den Faktor 0,5 kleiner als die der nächstgröberen Fraktion (A, B) ist.

3. Zusammensetzung nach Anspruch 1 oder 2,
**dadurch gekennzeichnet, dass** die erste Fraktion (A)
- einen D50-Wert von 1,0-2,0 mm, vorzugsweise von 1,1-1,9 mm, weiterhin vorzugsweise von 1,2-1,8 mm,
- einen D90-Wert von 1,75-2,0 mm und/oder
- einen D10-Wert von 1,0-1,25 mm
aufweist.

4. Zusammensetzung nach einem der vorhergehenden Ansprüche,
**dadurch gekennzeichnet, dass** die zweite Fraktion (B)
- einen D50-Wert von 0,5-1,0 mm, vorzugsweise von 0,55-0,9 mm, weiterhin vorzugsweise von 0,6-0,8 mm,
- einen D90-Wert von 0,8-1,0 mm und/oder
- einen D10-Wert von 0,5-0,7 mm
aufweist.

5. Zusammensetzung nach einem der vorhergehenden Ansprüche,
**dadurch gekennzeichnet, dass** die dritte Fraktion (C)
- einen D50-Wert von 0,25-0,5 mm, vorzugsweise von 0,3-0,45 mm,
- einen D90-Wert von0,45-0,5 mm und/oder
- einen D10-Wert von 0,25-0,30 mm
aufweist.

6. Zusammensetzung nach einem der vorhergehenden Ansprüche,
**dadurch gekennzeichnet, dass** jeweils bezogen auf das Gesamtgewicht der Ausgangsstoffe
- 30-60 Gew.-%, vorzugsweise 32-56 Gew.-%, weiterhin vorzugsweise 34-50 Gew.-% Leichtfüllstoffe der ersten Fraktion (A),
- 20-50 Gew.-%, vorzugsweise 24-45 Gew.-%, weiterhin vorzugsweise 26-40 Gew.-% der zweiten Fraktion (B) und
- 4-16 Gew.-%, vorzugsweise 6-14 Gew.-%, weiterhin vorzugsweise 8-12 Gew.-% der dritten Fraktion (C)
enthalten sind.

7. Zusammensetzung nach einem der vorhergehenden Ansprüche,
**dadurch gekennzeichnet, dass**
- die erste Fraktion (A) eine Rohdichte nach EN 1097-6 700 kg/m³, vorzugsweise 600 kg/m³, weiterhin vorzugsweise 400 kg/m³,
- die zweite Fraktion (B) eine Rohdichte nach EN 1097-6 800 kg/m³, vorzugsweise 700 kg/m³, weiterhin vorzugsweise 500 kg/m³ und/oder
- die dritte Fraktion (C) eine Rohdichte nach EN 1097-6 800 kg/m³, vorzugsweise 700 kg/m³, weiterhin vorzugsweise 600 kg/m³
aufweist bzw. aufweisen.

8. Zusammensetzung nach einem der vorhergehenden Ansprüche,
**dadurch gekennzeichnet, dass**
- die erste Fraktion (A) eine Schüttdichte nach EN 1097-3 500 kg/m³, vorzugsweise 400 kg/m³, weiterhin vorzugsweise 250 kg/m³,
- die zweite Fraktion (B) eine Schüttdichte nach EN 1097-3 600 kg/m³, vorzugsweise 500 kg/m³, weiterhin vorzugsweise 300 kg/m³ und/oder
- die dritte Fraktion (C) eine Schüttdichte nach EN 1097-3 600 kg/m³, vorzugsweise 500 kg/m³, weiterhin vorzugsweise 400 kg/m³
aufweist bzw. aufweisen.

9. Zusammensetzung nach einem der vorhergehenden Ansprüche, **dadurch gekennzeichnet, dass** Blähglas, Blähton, Blähschiefer, geschäumtes Blähglas, Blähglasgranulate, Blähperlite, Blähglimmer, insbesondere geblähtes oder geschäumtes Vermiculit, Hohlglaskugeln, Hohlkeramikkugeln, Lavaschlacke, Tuff und/oder Bims als Leichtfüllstoff in der Leichtfüllstoffkombination enthalten ist bzw. sind.

10. Zusammensetzung nach einem der vorhergehenden Ansprüche,
**dadurch gekennzeichnet, dass** ein Feinstfüllstoff mit einem D50-Wert von 1-100 µm, vorzugsweise 2-60 µm, weiterhin vorzugsweise von 4-40 µm enthalten ist.

11. Zusammensetzung nach Anspruch 10,
**dadurch gekennzeichnet, dass** der enthaltene Feinstfüllstoff eine Mohshärte ≤4, vorzugsweise ≤ 3,5, aufweist.

12. Zusammensetzung nach Anspruch 10 oder 11,
**dadurch gekennzeichnet, dass** der enthaltene Feinstfüllstoff einen negativen PCS-Wert, vorzugsweise eine PCS-Wert < -0,5 MJ/kg, weiterhin vorzugsweise einen PCS-Wert < -0,8 MJ/kg, aufweist.

13. Zusammensetzung nach einem der vorhergehenden Ansprüche,
**dadurch gekennzeichnet, dass** ein organisches Polymerbindemittel als organisches Bindemittel enthalten ist, vorzugsweise ein organisches Polymerbindemittel auf Basis von Vinylacetat/Ethylen-Copolymeren, ein Copolymer auf Basis von Vinylaromaten, insbesondere Styrol, und Acrylaten und/oder ein Copolymer auf Basis von Reinacrylaten.

14. Zusammensetzung nach einem der Ansprüche 1 bis 12,
**dadurch gekennzeichnet, dass** ein organisches Polymerbindemittel auf Epoxidharzbasis mit einem geeigneten Härter als organisches Bindemittel enthalten ist.

15. Zusammensetzung nach einem der vorhergehenden Ansprüche,
**dadurch gekennzeichnet, dass** ein Hydrophobierungsmittel, beispielsweise aus der Gruppe der Silikonharze, Polysiloxane, Fettsäuren, Fettsäurederivate, Wachse und/oder Paraffine, enthalten ist.

16. Verfahren zur Herstellung einer schallabsorbierenden Leichtbauplatte unter Verwendung einer Zusammensetzung nach einem der vorhergehenden Ansprüche, wobei die Zusammensetzung homogen gemischt, in eine Form eingefüllt und in der Form unter Einwirkung von Druck und Wärme zu einer Platte verpresst wird.

17. Verfahren nach Anspruch 16,
**dadurch gekennzeichnet, dass** die Zusammensetzung in der Form bei einer Temperatur von 80-160°C verpresst wird.

18. Verfahren nach Anspruch 16 oder 17,
**dadurch gekennzeichnet, dass** die Zusammensetzung in der Form mit einem Kompressionsfaktor von 50-75% verpresst wird.

19. Verfahren nach einem der Ansprüche 16 bis 18,
**dadurch gekennzeichnet, dass** zumindest eine Oberfläche der Leichtbauplatte mit einem Gewebe oder Vlies kaschiert wird.

## Geänderte Patentansprüche

### Geänderte Patentansprüche gemäss Regel 137(2) EPÜ.

1. Zusammensetzung zur Herstellung einer schallabsorbierenden Leichtbauplatte, enthaltend
- eine mindestens drei Partikelgrößenfraktionen enthaltende Leichtfüllstoffkombination, umfassend
• eine erste Fraktion (A) mit einer Partikelgröße nach DIN EN 933-1 von 0,8-2,5 mm, vorzugsweise von 0,9-2,2 mm, weiterhin vorzugsweise von 1,0-2,0 mm,
• eine zweite Fraktion (B) mit einer Partikelgröße nach DIN EN 933-1 von 0,28-1,6 mm, vorzugsweise von 0,4-1,25 mm, weiterhin vorzugsweise von 0,5-1,0 mm, und
• eine dritte Fraktion (C) mit einer Partikelgröße nach DIN EN 933-1 von 0,1-0,8 mm, vorzugsweise von 0,2-0,63 mm, weiterhin vorzugsweise von 0,25-0,5 mm
- mindestens ein organisches Bindemittel sowie
- mindestens ein Additiv.

2. Zusammensetzung nach Anspruch 1,
**dadurch gekennzeichnet, dass** die Partikelgröße nach DIN EN 933-1 einer Fraktion (B, C) um mindestens den Faktor 0,5 kleiner als die der nächstgröberen Fraktion (A, B) ist.

3. Zusammensetzung nach Anspruch 1 oder 2,
**dadurch gekennzeichnet, dass** die erste Fraktion (A)
- einen D50-Wert von 1,0-2,0 mm, vorzugsweise von 1,1-1,9 mm, weiterhin vorzugsweise von 1,2-1,8 mm,
- einen D90-Wert von 1,75-2,0 mm und/oder
- einen D10-Wert von 1,0-1,25 mm
aufweist.

4. Zusammensetzung nach einem der vorhergehenden Ansprüche,
**dadurch gekennzeichnet, dass** die zweite Fraktion (B)
- einen D50-Wert von 0,5-1,0 mm, vorzugsweise von 0,55-0,9 mm, weiterhin vorzugsweise von 0,6-0,8 mm,
- einen D90-Wert von 0,8-1,0 mm und/oder
- einen D10-Wert von 0,5-0,7 mm
aufweist.

5. Zusammensetzung nach einem der vorhergehenden Ansprüche,
**dadurch gekennzeichnet, dass** die dritte Fraktion (C)
- einen D50-Wert von 0,25-0,5 mm, vorzugsweise von 0,3-0,45 mm,
- einen D90-Wert von0,45-0,5 mm und/oder
- einen D10-Wert von 0,25-0,30 mm
aufweist.

6. Zusammensetzung nach einem der vorhergehenden Ansprüche,
**dadurch gekennzeichnet, dass** jeweils bezogen auf das Gesamtgewicht der Ausgangsstoffe
- 30-60 Gew.-%, vorzugsweise 32-56 Gew.-%, weiterhin vorzugsweise 34-50 Gew.-% Leichtfüllstoffe der ersten Fraktion (A),
- 20-50 Gew.-%, vorzugsweise 24-45 Gew.-%, weiterhin vorzugsweise 26-40 Gew.-% der zweiten Fraktion (B) und
- 4-16 Gew.-%, vorzugsweise 6-14 Gew.-%, weiterhin vorzugsweise 8-12 Gew.-% der dritten Fraktion (C)
enthalten sind.

7. Zusammensetzung nach einem der vorhergehenden Ansprüche,
**dadurch gekennzeichnet, dass**
- die erste Fraktion (A) eine Rohdichte nach EN 1097-6 < 700 kg/m³, vorzugsweise < 600 kg/m³, weiterhin vorzugsweise < 400 kg/m³,
- die zweite Fraktion (B) eine Rohdichte nach EN 1097-6 < 800 kg/m³, vorzugsweise < 700 kg/m³, weiterhin vorzugsweise < 500 kg/m³ und/oder
- die dritte Fraktion (C) eine Rohdichte nach EN 1097-6 < 800 kg/m³, vorzugsweise < 700 kg/m³, weiterhin vorzugsweise < 600 kg/m³
aufweist bzw. aufweisen.

8. Zusammensetzung nach einem der vorhergehenden Ansprüche,
**dadurch gekennzeichnet, dass**
- die erste Fraktion (A) eine Schüttdichte nach EN 1097-3 < 500 kg/m³, vorzugsweise < 400 kg/m³, weiterhin vorzugsweise < 250 kg/m³,
- die zweite Fraktion (B) eine Schüttdichte nach EN 1097-3 < 600 kg/m³, vorzugsweise < 500 kg/m³, weiterhin vorzugsweise < 300 kg/m³ und/oder
- die dritte Fraktion (C) eine Schüttdichte nach EN 1097-3 < 600 kg/m³, vorzugsweise < 500 kg/m³, weiterhin vorzugsweise < 400 kg/m³
aufweist bzw. aufweisen.

9. Zusammensetzung nach einem der vorhergehenden Ansprüche,
**dadurch gekennzeichnet, dass** Blähglas, Blähton, Blähschiefer, geschäumtes Blähglas, Blähglasgranulate, Blähperlite, Blähglimmer, insbesondere geblähtes oder geschäumtes Vermiculit, Hohlglaskugeln, Hohlkeramikkugeln, Lavaschlacke, Tuff und/oder Bims als Leichtfüllstoff in der Leichtfüllstoffkombination enthalten ist bzw. sind.

10. Zusammensetzung nach einem der vorhergehenden Ansprüche,
**dadurch gekennzeichnet, dass** ein Feinstfüllstoff mit einem D50-Wert von 1-100 µm, vorzugsweise 2-60 µm, weiterhin vorzugsweise von 4-40 µm enthalten ist.

11. Zusammensetzung nach Anspruch 10,
**dadurch gekennzeichnet, dass** der enthaltene Feinstfüllstoff eine Mohshärte ≤4, vorzugsweise ≤ 3,5, aufweist.

12. Zusammensetzung nach Anspruch 10 oder 11,
**dadurch gekennzeichnet, dass** der enthaltene Feinstfüllstoff einen negativen PCS-Wert, vorzugsweise eine PCS-Wert < -0,5 MJ/kg, weiterhin vorzugsweise einen PCS-Wert < -0,8 MJ/kg, aufweist.

13. Zusammensetzung nach einem der vorhergehenden Ansprüche,
**dadurch gekennzeichnet, dass** ein organisches Polymerbindemittel als organisches Bindemittel enthalten ist, vorzugsweise ein organisches Polymerbindemittel auf Basis von Vinylacetat/Ethylen-Copolymeren, ein Copolymer auf Basis von Vinylaromaten, insbesondere Styrol, und Acrylaten und/oder ein Copolymer auf Basis von Reinacrylaten.

14. Zusammensetzung nach einem der Ansprüche 1 bis 12,
**dadurch gekennzeichnet, dass** ein organisches Polymerbindemittel auf Epoxidharzbasis mit einem geeigneten Härter als organisches Bindemittel enthalten ist.

15. Zusammensetzung nach einem der vorhergehenden Ansprüche,
**dadurch gekennzeichnet, dass** ein Hydrophobierungsmittel, beispielsweise aus der Gruppe der Silikonharze, Polysiloxane, Fettsäuren, Fettsäurederivate, Wachse und/oder Paraffine, enthalten ist.

16. Verfahren zur Herstellung einer schallabsorbierenden Leichtbauplatte unter Verwendung einer Zusammensetzung nach einem der vorhergehenden Ansprüche, wobei die Zusammensetzung homogen gemischt, in eine Form eingefüllt und in der Form unter Einwirkung von Druck und Wärme zu einer Platte verpresst wird.

17. Verfahren nach Anspruch 16,
**dadurch gekennzeichnet, dass** die Zusammensetzung in der Form bei einer Temperatur von 80-160°C verpresst wird.

18. Verfahren nach Anspruch 16 oder 17,
**dadurch gekennzeichnet, dass** die Zusammensetzung in der Form mit einem Kompressionsfaktor von 50-75% verpresst wird.

19. Verfahren nach einem der Ansprüche 16 bis 18,
**dadurch gekennzeichnet, dass** zumindest eine Oberfläche der Leichtbauplatte mit einem Gewebe oder Vlies kaschiert wird.
